# EUROPEAN PATENT APPLICATION

(11) **EP 0 981 211 A1**
(43) Date of publication of application: **23.02.2000**
(21) Application number: 98305186.3
(22) Date of filing: 30.06.1998
(51) Int. Cl.: H04B 7/185

(54) **Pre-paid telecommunication services in LEO mobile satellites system**

(71) Applicant: ICO Services Ltd., London W6 9BN (GB)
(72) Inventor: Hui, Kelly, London, W6 9BN (GB)
(74) Representative: Read, Matthew Charles

(57) **Abstract**

A pre-payment subscriber to a satellite mobile telephone system is provided with the same services on roamed terrestrial networks as any other subscriber. The subscriber's network maintains a credit record for each pre-payment subscriber and is capable of calculating, in response to a request from the subscriber's user terminal seeking to access services on another network, the maximum amount of call time which the subscriber's available credit allows on the other network. The available call time is transmitted to the user terminal which controls the call as well as notifying the first network of unelapsed call time.

## Description

This invention relates to the provision of pre-paid telecommunication services in mobile telecommunication networks, particularly but not exclusively to providing such services to a pre-payment subscriber roaming away from his home network.

Terrestrial mobile telecommunications systems are well known and a number of different systems have developed which operate according to different standards. These public land mobile networks (PLMNs) may operate according to analog or digital standards. In Europe, much of the Far East and elsewhere, the Global System Mobile (GSM) network has become popular, whereas in the US, the Advanced Mobile Phone Service (AMPS) and the Digital Advanced Mobile Phone System (DAMPS) are in use, and in Japan, the Personal Handiphone System (PHS) and the Personal Digital Communication (PDC) network are used. More recently, proposals have been submitted for a Universal Mobile Telecommunications System (UMTS). These networks are all cellular and land-based with transmitters/receivers which communicate with mobile user terminals.

For example, in a PLMN based on the GSM system, individual cells of the PLMN are served by a series of geographically spaced, terrestrial base transceiver stations (BTSs) which are coupled through base station controllers (BSCs) to a mobile switching centre (MSC) which may provide a gateway out of the network to a conventional public switched telephone network (PSTN). The PLMN includes a home location register (HLR) which stores information about the subscribers to the system and their user terminals. In general, a GSM customer has a subscription relationship with a single PLMN, referred to herein as the home network of the subscriber. When a user terminal is switched on, it registers with the home network HLR. If the user roams to a different GSM network, the user terminal registers with a visitor location register (VLR) of the visited network, which communicates with the HLR of the home network for authentication, routing and other purposes. DAMPS, PHS and PDC networks include similar location registers.

More recently, a number of different mobile telecommunication systems have been proposed that use satellite communication links between mobile user terminals and conventional terrestrial networks.

One network known as the IRIDIUM^{™} satellite cellular system and described in, for example, EP-A-0 365 885 and US Patent No. 5 394 561 (Motorola), makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed, with an orbital radius in the range of 10-20,000 km; reference is directed to Walker J.G. "Satellite Patterns for Continuous Multiple Whole Earth Coverage" Royal Aircraft Establishment, pp 119-122 (1977). Reference is further directed to the ICO^{™} satellite cellular system described, for example, in GB-A-2 295 296, and to the ODYSSEY^{™} satellite cellular system described in EP-A-0 510 789. With these systems, the satellite communication link does not permit communication between adjacent satellites. Instead, a signal from a mobile user terminal such as a mobile handset is directed firstly to the satellite and then to a ground station or satellite access node (SAN), which is connected to a conventional land-based telephone network. This has the advantage that many components of the system are compatible with known digital terrestrial cellular technology such as GSM. Also, simpler satellite communication techniques can be used than with a LEO network.

In satellite communications networks, ground stations are located at different sites around the world in order to communicate with the orbiting satellites. In the ICO^{™} system and others, a visitor location register is associated with each of the satellite ground stations, which maintains a record of the individual user terminals that are making use of the particular ground station.

In certain areas of the world, coverage provided by a conventional terrestrial PLMN and the satellite network will overlap. It has been proposed that the individual user terminals be selectively operable with either a terrestrial PLMN or the satellite network. The user terminals may include a switch to allow the user to select the network or alternatively, an automatic selection may be made e.g. on the basis of defined customer choice or other factors. Thus, for example, an ICO subscriber can use a PLMN as a roamed network, with billing and other usage information being passed back to the ICO system for billing to the subscriber. It is envisaged that, normally, the conventional terrestrial PLMNs will be preferred when available, for example in built-up areas, for reasons including cost and signal strength.

The use of a network by subscribers to other networks is governed by roaming agreements between the network operators concerned. These agreements typically make provision for the comprehensive exchange of tariff information, so that each network can calculate the cost which will be incurred by its roaming subscribers in advance. For example, a roaming agreement may provide that the roamed network B will charge subscribers to the home network A, making calls to a particular location, on a particular tariff, at a roaming rate which, for example, equals the amount it would charge its own subscribers, plus 15 per cent.

When a network A subscriber roams to network B, network B first seeks to authenticate the subscriber with network A. If network A provides the necessary authentication, the subscriber is allowed to make a call using network B, which charges the call at the appropriate rate. The bill for the call is then sent to the subscriber's home network A, generally as part of an aggregated charge for services provided by network B to all of network A's subscribers over a predetermined period. The home network A operator can then bill its subscribers individually. In the GSM system, for example, the charging procedure is based on individual records generated for each call and known as toll tickets or call detail records. This principle is readily extendible to the case where a number of networks are involved in passing on calls.

As well as charging for calls on the normal time-elapsed basis, many operators provide their own subscribers with a pre-payment service, where a subscriber pays up front for a specified amount of call time. As well as being an attractive option for many subscribers to assist with controlling call costs, this is a particularly important form of charging for satellite telephone system operators, for whom a pre-payment system may be the only way of guaranteeing payment in many of the countries covered by the service, particularly those with cash based economies or those without adequate credit checking facilities.

However, there are significant difficulties associated with providing roaming capabilities for pre-payment subscribers. By way of illustration, when a visited network B seeks to authenticate one of network A's roaming pre-payment subscribers, network A will not provide such authentication unless it has some way of ensuring that the subscriber will not overrun its allotted credit. Practically, this requires some means of terminating the subscriber's call in real-time once the paid for call-time has expired.

One possible way of solving this problem in relation to GSM networks is to use the standard GSM advice of charge (AoC) service, in which charging information is sent from the visited network B to the roaming user terminal based on the tariff arrangement specified in the roaming agreement. For example, on call set-up, the visited network B performs a charge analysis function to determine the tariff to be applied. This is transmitted to the user terminal at the start of the call in the form of a charge advice information (CAI) element describing the tariff in terms of unit charges, unit length and so on. On receipt of the CAI, the user terminal calculates the actual call charges and subtracts them from counters stored in a Subscriber Identification Module (SIM) within the user terminal, which also stores the available credit information. The user terminal can therefore ensure that the available credit is not exceeded.

One disadvantage of this approach is that charging information is periodically sent over the air to the user terminal in a standard AOC format, which may facilitate the risk of tampering at the user terminal/SIM interface so as to obtain free calls.

Another disadvantage is that if a call is to be routed from a roaming pre-payment subscriber over a number of networks, each network would have to provide the hosting network with real-time charging information based on its own roaming tariff to enable the hosting network to provide accurate real-time charging information to the roaming subscriber. This would require a plurality of bilateral agreements between all of the network operators involved over and above the standard roaming agreements. Further, the substantial increase in real-time signalling over potentially international networks that this would create, means that the AoC approach is not a particularly practical solution to the problem of providing roaming capabilities to pre-payment subscribers.

The present invention aims to address the above problems.

In accordance with the invention there is provided a method of providing a pre-payment subscriber to a first communications network with access to a communications service provided by a second communications network when the subscriber roams to the second network, wherein the subscriber has a predetermined amount of credit available for use on the service, comprising determining from the available credit amount a time period for which the subscriber is permitted to use the service, so as to enable control of the subscriber's use of said service in dependence on the determined time period.

A method according to the invention may include determining the time period at the first network while the subscriber is roaming to the second network, including determining the time period at a calculation means connected to the first network.

According to a further aspect of the invention, there is provided a method of providing a pre-payment subscriber to a first communications network with access, via a user terminal, to a communications service provided by a second communications network while the subscriber is roaming to the second network, wherein the subscriber has a predetermined amount of credit available for use on the service, comprising initiating a transmission from the user terminal to the first network requesting notification of the time period for which the subscriber is permitted to use the service corresponding to the amount of the subscriber's available credit, so as to enable control of the subscriber's use of said service in dependence on the determined time period.

There is also provided, in accordance with the invention, a telecommunications network configuration comprising first and second networks, the network configuration including means for providing a pre-payment subscriber to the first network with access to a communications service on a second network when the subscriber roams to the second network, wherein the subscriber has a predetermined credit amount available for use on said service, further comprising means for determining from the available credit amount a time period for which the subscriber is permitted to use the service so as to enable control of the subscriber's use of said service in dependence on the determined time period.

According to the invention there is further provided apparatus for providing a pre-payment subscriber to a first communications network with access to a communications service on a second communications network via a user terminal, when the subscriber roams to the second network, wherein the subscriber has a predetermined amount of credit available for use on the service, comprising means responsive to requests from the user terminal to determine from the credit amount a time period for which the subscriber is permitted to use the service so as to enable control of the subscriber's use of said service in dependence on the determined time period.

An advantage which may be obtainable from embodiments of the invention is that the home network can retain control over the call in a way which is transparent to the roamed network and which may therefore obviate the need for a bilateral agreement between the network operators. In this case, the roamed network is unaware that the subscriber being hosted is a pre-payment subscriber so that call cost and credit information need not be transmitted to the user terminal, which may enhance network and subscriber security. In particular, the subscriber's credit information can remain under the sole control of the home network and although call time information corresponding to the credit information may be transmitted to and from the user terminal in accordance with particular embodiments of the invention, this can be done in a format which is proprietary to the home network, again providing additional security.

Embodiments of the invention will now be described by way of example with reference to the accompanying drawings, in which:
Figure 1 is a schematic diagram of a satellite telecommunications system together with a local, land-based mobile telecommunications system, in accordance with the invention;
Figure 2 is a more detailed block diagram of the satellite network in the vicinity of SAN 1a and the associated terrestrial cellular network;
Figure 3 is a schematic block diagram illustrating the provision of a pre-payment server within the satellite network;
Figure 4 is a schematic diagram of a mobile user terminal;
Figure 5 is a schematic block diagram of the circuits of the user terminal shown in Figure 4;
Figure 6 is a schematic block diagram of the SIM card shown in Figures 4 and 5; and
Figure 7 is a flow chart showing illustrating the credit checking procedure according to the invention.

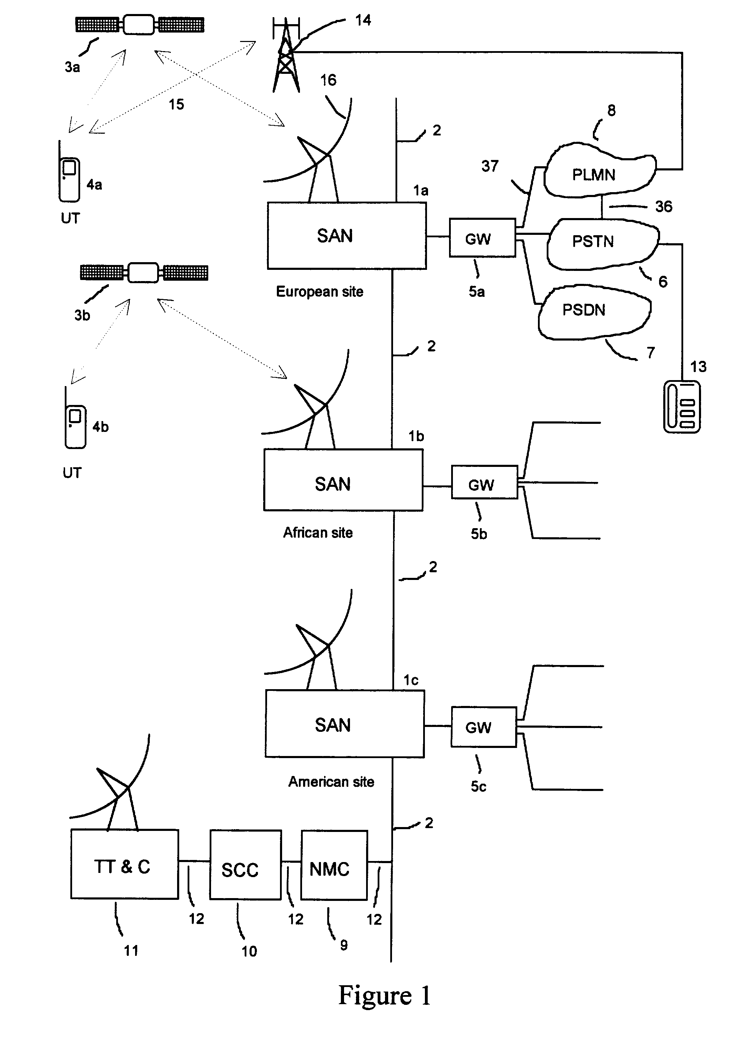

Referring to Figure 1, a satellite mobile telephone system comprises a plurality of satellite access nodes (SAN) 1a, 1b, 1c interconnected by a high capacity digital network 2 ("the backbone network"), a plurality of satellites 3a, 3b, a plurality of user terminals (UT) 4a, 4b, gateways (GW) 5a, 5b, 5c providing connections between the SANs 1a, 1b, 1c and other conventional land-based telephone networks 6, 7, 8, a network management centre (NMC) 9, a satellite control centre (SCC) 10 and a tracking, telemetry and control station (TT&C) 11. The NMC 9, the SCC 10 and the TT&C 11 are interconnected by a lower capacity digital network 12 which is also connected to the backbone network 2. The other land based telephone networks 6, 7, 8 comprise the public switched telephone network (PSTN) 6, which permits connection to be made to a conventional telephone set 13, a public switched data network (PSDN) 7 and a public land mobile network (PLMN) 8.

The SCC 10 and the TT&C 11 control the operation of the satellites 3a, 3b, for instance setting transmit power levels and transponder input tuning, as directed by the NMC 9. Telemetry signals from the satellites 3a, 3b are received by the TT&C 11 and processed by the SCC 10 to ensure that the satellites 3a, 3b are functioning correctly.

As shown in Figure 1, the user terminal UT 4a can also communicate with the conventional land-based mobile network PLMN 8, which includes a transceiver station 14 that establishes a duplex link 15 with the user terminal UT 4a. In this example, the PLMN 8 is a GSM network.

For a fuller understanding of GSM, reference is directed to the various GSM Recommendations issued by the European Telecommunications Institute (ETSI). Also reference is directed to "The GSM System for Mobile Communications" by M. Mouly and M-B. Pautet, 1992 Cell & Sys, 1992, ISBN: 2-9507190-0-7 for a more readable overview.

The satellite network is designed to provide worldwide coverage, so the satellites 3a, 3b form part of a constellation of satellites, which may be arranged in several orbits. In one example, two orbits of five satellites are used, which can be shown to provide coverage of a major part of the surface of the earth, in which for a 10° satellite elevation angle, one satellite can be accessed by a UT all of the time and two satellites can be accessed for at least 80% of the time, thereby providing system diversity. Further satellites may be included in the constellation in order to provide additional redundancy and diversity.

The satellites are typically arranged in a medium earth orbit (MEO) constellation, for example with an orbital radius of 10,355 km, although the invention is not restricted to a particular orbital radius. In this embodiment, satellites 3a, 3b are shown in a common orbit and are tracked by the antenna arrangement 16 of each SAN 1a, 1b, 1c. Typically, each SAN includes four antennas for tracking individual satellites of the constellation, with one spare antenna. The SANs are spaced around the earth in order to provide continuous coverage. In the embodiment shown, SAN 1a may be located in Europe whereas SAN 1b may be located in Africa, SAN 1c in America and other SANs may be located elsewhere. In Figure 1, the SAN 1b is shown communicating with user terminal UT 4b via satellite 3b. For further details of the satellite network, reference is directed to GB-A-2 295 296.

The satellites 3a, 3b are in non-geostationary orbits and comprise generally conventional satellites such as the Hughes HS 601. They may include features disclosed in GB-A-2 288 913. Each satellite 3a, 3b is arranged to generate an array of radio beams covering a footprint on the earth beneath the satellite, each beam including a number of different frequency channels and time slots as described in GB-A-2 293 725. The beams thus provide adjacent cellular areas which correspond to the cells of a conventional land-based mobile telephone network.

During a telephone call, the user terminals UT 4a, 4b communicate with the satellite 3a, 3b via a full duplex channel comprising a down link channel and an up link channel. The channels include TDMA time slots on frequencies allocated on initiation of the call or re-allocated during a call.

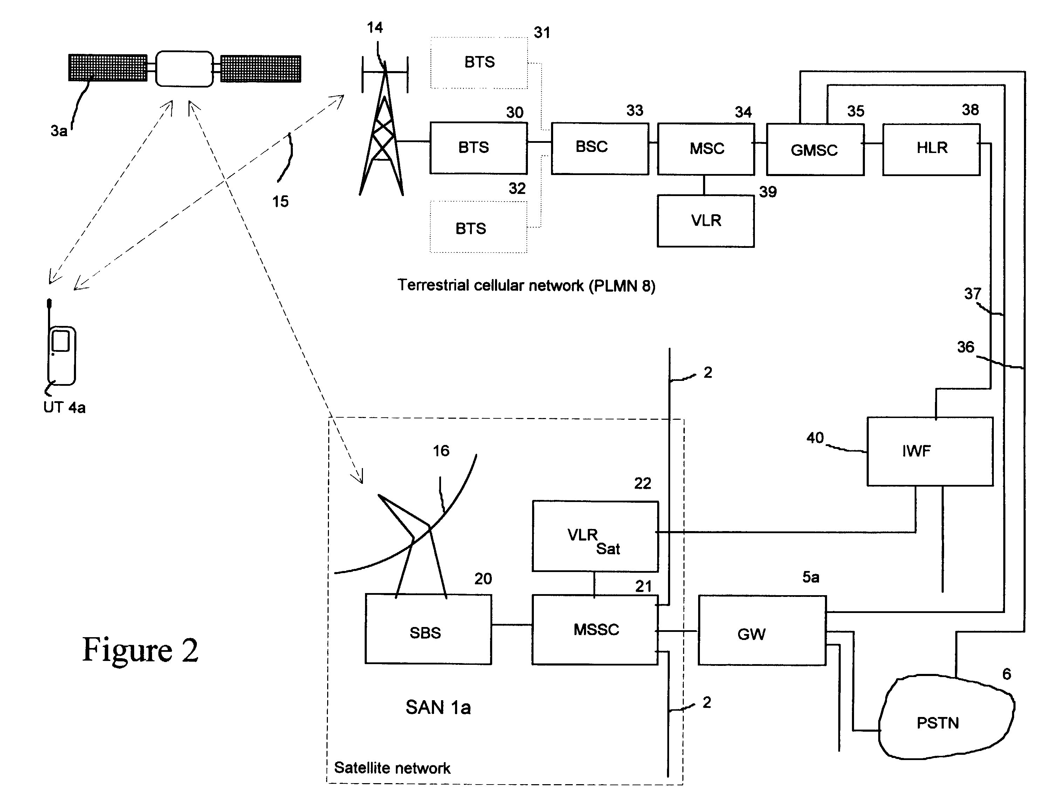

Referring to Figure 2, the configuration of a SAN la and the local PLMN 8 is shown in more detail. The SAN 1a consists of a satellite base station SBS 20 which is coupled to the five dish antennas 16 for tracking the satellites, the SBS 20 including transmitter and receiver circuits with amplifiers, multiplexers, demultiplexer and codecs. A mobile satellite switching centre MSSC 21 is coupled to SBS 20 and includes a satellite visitor location register VLR_{SAT} 22. MSSC 21 couples communication signals to the backbone network 2 and to the SBS 20, so as to allow individual telephone calls to be established through the backbone network 2 and the duplex communication link via the satellite 3a, to the mobile terminal UT 4a.

Also, MSSC 21 is connected to the gateway GW 5a so as to provide an output connection to PLMN 8, together with PSDN 7 and PSTN 6 shown in Figure 1. It will be understood that all the SANs are of similar construction with a respective VLR_{SAT} to maintain a record of the subscribers registered.

The VLR_{SAT} 22 maintains a record of each of the subscribers currently registered, namely the identity of each user that is making use of the SAN la for signal communication.

The MSSC 21 responds to addresses on incoming communication signals from the antennas 16 to route the signals appropriately to their destinations.

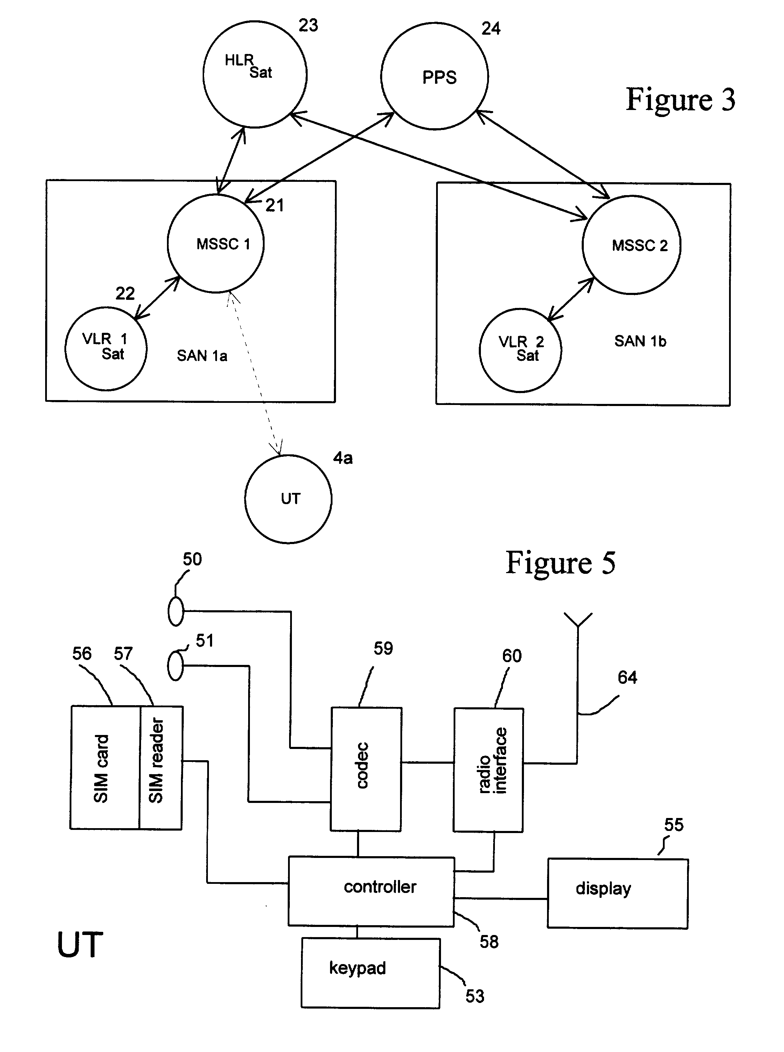

Referring to Figure 3, the satellite service provision makes use of a database referred to herein as the satellite home location register (HLR_{SAT}) 23 that contains subscription records relating to each mobile user. The record includes the user's identity, which comprises an International Mobile Subscriber Identity (IMSI), the current status of the subscription, and the currently registered location of the UT. The HLR_{SAT} may be located at the NMC 9 shown in Figure 1 or may be distributed among the SANs 1a, 1b, 1c.

The satellite service provision also makes use of a server which is referred to herein as the Pre-Payment Server (PPS) 24, the operation of which is described in detail below. As with the HLR_{SAT}, the location of the PPS 24 is flexible. For example, it may be located at the NMC 9 shown in Figure 1 or may be located at one of the SANs 1a, 1b, 1c.

Referring again to Figure 2, the PLMN 8 in this example comprises a UK based GSM network and includes a number of base transceiver stations BTS 30, 31, 32, which are geographically spaced apart in order to support a cellular network in a manner well known *per se.* BTS 30 is shown with an associated antenna 14, connected by a landline to a base station controller BSC 33, it being understood that a plurality of BTSs 30, 31, 32 are connected to the BSC 33 in a manner well known *per se.* The BSC 33 is connected to a mobile switching centre MSC 34 which can route calls within the mobile network and also through a gateway GMSC 35 to a conventional PSTN 6 over line 36, in a manner well known *per se* or to the satellite network, over line 37 through the gateway GW 5a.

A home location register HLR 38 for the land-based network 8 is provided coupled to the GMSC 35. The HLR, in a conventional manner, keeps a record of the IMSIs of the users subscribing to the network 8. A visitor location register VLR 39 maintains a record of subscribers temporarily registered with the network 8. For example, with the PLMN 8 sited in the UK, subscribers to GSM networks in another country e.g. Germany may be locally registered on a temporary basis whilst in the UK. In a conventional manner, telephone usage information is relayed from the VLR 39 and GMSC 35 to the German network (not shown) for billing purposes. Interconnection of the PLMN to other types of network may be facilitated by the provision of an Interworking function IWF 40 which is configured to adapt GSM transmission peculiarities to those of the connected network. Reference is directed to our co-pending application 97302222.1 "Interworking between Telecommunications Networks" for details of an implementation of the IWF between a GSM PLMN and a satellite mobile telephone system.

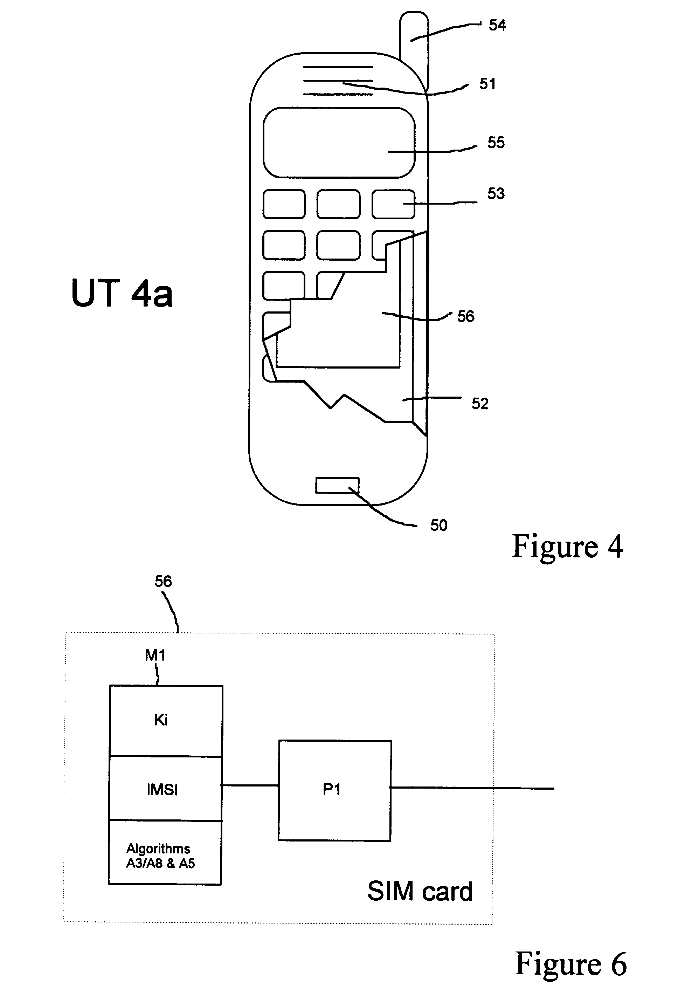

Referring to Figures 4 and 5, the mobile user terminal UT 4a is configured to operate with both the local terrestrial cellular network and the satellite network. Thus, in the example shown in Figure 2, UT 4a can operate either according to a land-based GSM protocol or according to the satellite network protocol. As shown in Figure 4, UT 4a comprises a mobile handset which is capable of dual mode operation. It includes conventional GSM circuits for use with the land-based cellular network 9 together with similar circuitry for use with the satellite network. A shown in Figure 4, the handset comprises a microphone 50, a loudspeaker 51, a battery 52, a keypad 53, an antenna 54 and a display 55. The handheld unit UT 4a also includes a subscriber identification module (SIM) 56. This can be either a smart card, having the well-known size of a credit card, or it may be a smaller plug-in module, in accordance with ISO standards. The circuit configuration of the UT 4a is shown in block diagrammatic form in Figure 5. The SIM 56, for example a SIM smart card, is received in an SIM card reader 57 coupled to a controller 58, typically a microprocessor. The microphone and loudspeaker 50, 51 are coupled to first and second codecs 59a, 59b coupled to a conventional radio interface 60 connected to the antenna 54 so as to transmit and receive communication signals, in a manner well known *per se.* In a Phase 2+ compliant GSM system, the SIM 56 includes software known as the SIM Application Toolkit which enables sophisticated control of UT functions by the SIM.

Referring to Figure 6, the SIM 56 includes a memory M1 which stores an IMSI, which is used both for the GSM network 8 and the satellite network. The memory also stores an encryption algorithm and an authentication algorithm, and an encryption key Ki, for subscription authentication and communication encryption according to the GSM Recommendations *supra.* Thus, the UT 4a can register with either network individually, according to conventional GSM registration techniques, which are well known in the art. For further details of the authentication procedure and subsequent data encryption/decryption, reference is directed to "The GSM System for Mobile Communications" M. Mouly & M-B. Pautet, Cell & Sys.1992 pp 477-492.

As previously described, the satellite and land-based networks may be selected automatically according to user determined criteria. However in this example, for simplicity, the satellite and land-based GSM networks are selected manually by use of a key on the keypad 53. When the GSM network is selected, the controller 58 sets the radio interface 60 to operate at a frequency suitable for the land-based GSM network 8 and codec 59a, suitable for the GSM network, is selected. Alternatively, if the keypad 53 is operated to select the satellite network, the controller 58 operates to configure the radio interface 60 to a frequency and protocol appropriate for the satellite network, and codec 59b is selected, suitable for the satellite network. Thus, when the GSM network is selected, communication takes place over the duplex link 15 shown in Figure 2, whereas when the satellite network is selected, communication takes place over the duplex links via the satellite 3a.

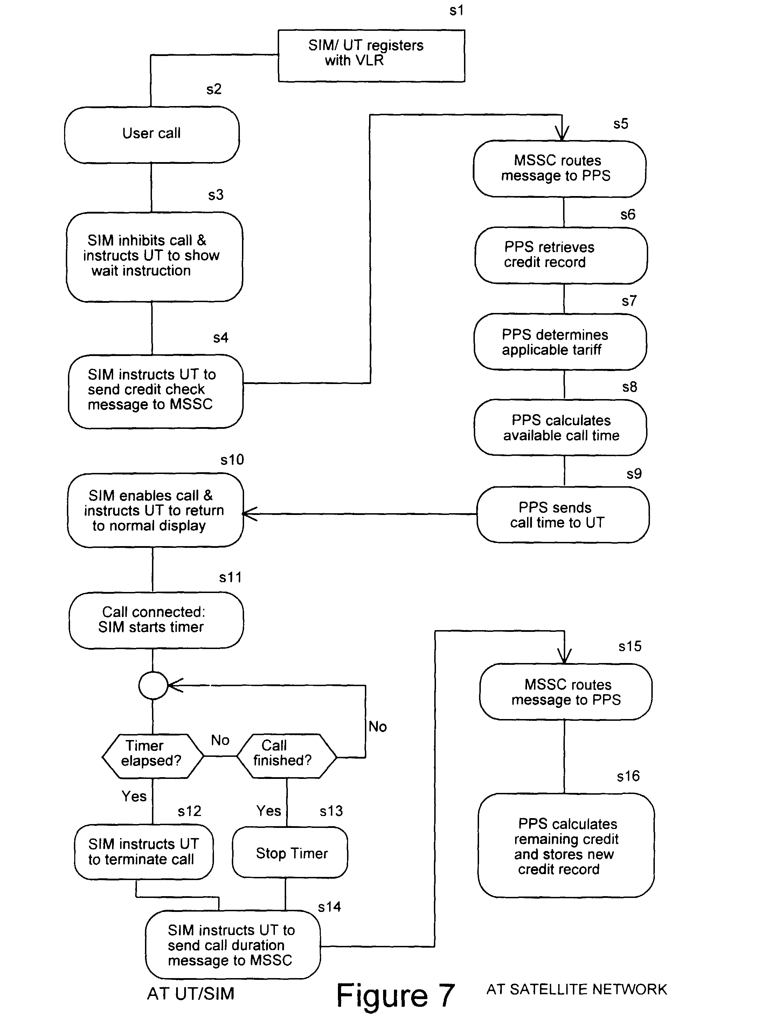

Referring to Figure 7, the routing of a call made by a pre-payment ICO subscriber in a roamed GSM network, using a user terminal UT 4a, to a handset in a remote PSTN 6 will now be considered in detail. The pre-payment subscriber has a pre-payment SIM 56 which can be charged by, for example, telephoning a subscription number and using a suitable payment means such as a credit card to buy the desired amount of credit. The pre-payment SIM 56 such as a Phase 2+ SIM Toolkit compliant SIM card, is set up in accordance with the invention to control the UT 4a.

In general terms, the functions of the pre-payment SIM 56 include initiating a credit checking validation message, managing the allowable call duration and controlling UT operations, as described in more detail below.

When the UT 4a is switched on, it attempts to obtain service from its home network. If it cannot do so, for example because it has roamed to the service area of another network, such as PLMN 8, the first step (s1) is for it to register with the VLR 39 associated with PLMN 8, in a manner which is well known *per se.* As a result of the registration process, the SIM obtains the identity of the roamed network PLMN 8.

When the subscriber subsequently wishes to make a call using the PLMN 8, he or she enters the number of the target telephone 13 at the UT keypad 53 and presses a 'SEND' button on the keypad (s2). The SIM 56 inhibits the UT 4a from making the call directly and instead instructs it to display a suitable message to the user, for example; "Checking credit ... please wait" (s3). The SIM then instructs the UT (s4) to send a message to the home network using the standard GSM Unstructured Supplementary Service Data (USSD) service which is supported by all GSM providers. The content of the USSD message includes the identity of the roamed network, the IMSI and the number dialled. The message is coded according to pre-payment credit validation and security protocols determined by the home network.

The USSD message is received by the home network MSSC 21 which is configured to route the message (s5) to the Pre-Payment Server (PPS) 24 which includes a database containing credit records for each pre-payment subscriber. The PPS is implemented, for example, on a dedicated computer.

The PPS 24 identifies the subscriber on the basis of the supplied IMSI information and retrieves the credit record (s6) corresponding to that subscriber. It then uses the roamed network identity, dialled number information and current time information to determine (s7) the PLMN 8 tariff which will apply to the call. The tariff information is obtained from the standard roaming agreement between the network operators.

Knowing the available credit and the applicable tariff, the PPS calculates (s8) the permitted call duration for the particular call to be made on the network 8. This information is transmitted to the UT and the SIM at step s9 in a USSD message via the MSSC 21.

The SIM enables the call on the roamed network 8 and instructs the UT to return to a normal display (s10), for example displaying the number being dialled. It then starts an internal timer (s11) when a connection is established, which counts down from the time supplied by the PPS 24. The SIM may instruct the UT to show a variety of possible displays at this stage, for example, to display the remaining call time (step not shown for clarity).

If the timer expires during a call, the SIM instructs the UT to terminate the call (s12) and then instructs the UT to send a USSD message back to the MSSC 21 (s14) indicating the call duration. If the call finishes before the timer expires, the SIM stops the timer (s13) and, as in the case of timer expiry, instructs the UT to send a USSD message back to the MSSC 21 (s14) indicating the call duration. In either case, the MSSC 21 sends the USSD message to the PPS 24 (s15), which calculates the remaining call time and converts the remaining time back to a credit amount which is credited to the subscriber (s16). The SIM 56 suspends further call attempts except calls to a home network number to recharge pre-payment credits.

Alternatively, the PPS 24 sets the credit record to zero at step s8 when it informs the SIM of the available call time, and resets it only if it receives a USSD message which is set up to indicate that some unexpired time remains. This avoids the need for the UT to send back a USSD message if the call time expires.

While the invention has been explained in terms of a real-time credit check while the subscriber is roaming to a network other than its home network, it is also envisaged that the credit calculation could be performed in advance, taking into account different tariffs on different networks. The available time period information could then be stored in the SIM card for use when the user terminal subsequently roams to another network.

Alternatively, rather than performing a credit check on every call set-up, a credit check is carried out on a daily or other periodic basis. For example, when the UT is switched on, the credit details are temporarily stored in the SIM card. The SIM card then takes the place of the pre-payment server for calls made during the day, only updating the pre-payment server when the UT is switched off at the end of the day.

## Claims

1. A method of providing a pre-payment subscriber to a first communications network with access to a communications service provided by a second communications network when the subscriber roams to the second network, wherein the subscriber has a predetermined amount of credit available for use on the service, comprising:
determining from the available credit amount a time period for which the subscriber is permitted to use the service, so as to enable control of the subscriber's use of said service in dependence on the determined time period.

2. A method according to claim 1, including determining the time period at the first network while the subscriber is roaming to the second network.

3. A method according to claim 2, including determining the time period at a calculation means (24) connected to the first network.

4. A method according to claim 2 or 3, wherein the subscriber can access the service via a user terminal, including determining the time period in response to a request from the user terminal for access to the service.

5. A method according to claim 4, when dependent on claim 3, further comprising initiating the transmission of the determined time period from the calculation means (24) to the user terminal.

6. A method according to claim 4 or 5, including encoding the determined time period for transmission to the user terminal using a proprietary signal format.

7. A method according to any one of the preceding claims wherein the first network comprises a satellite telecommunications network and the second network comprises a land based mobile network (PLMN 8).

8. A method of providing a pre-payment subscriber to a first communications network with access, via a user terminal, to a communications service provided by a second communications network while the subscriber is roaming to the second network, wherein the subscriber has a predetermined amount of credit available for use on the service, comprising:
initiating a transmission from the user terminal to the first network requesting determination of the time period for which the subscriber is permitted to use the service corresponding to the amount of the subscriber's available credit, so as to enable control of the subscriber's use of said service in dependence on the determined time period.

9. A method according to claim 8, including inhibiting a call made by the user terminal to enable the time period determination request to be made.

10. A method according to claim 8 or 9, including receiving notification of the determined time period.

11. A method according to any one of claims 8 to 10, comprising comparing the duration of a call in progress with the determined time period.

12. A method according to claim 10 or 11, comprising terminating a call made by the user terminal using the service when the determined time period elapses.

13. A method according to any one of claims 8 to 12, comprising initiating transmission to the first network of the time remaining after a call made by the user terminal using the service is terminated.

14. A telecommunications network configuration comprising first and second networks, the network configuration including means for providing a pre-payment subscriber to the first network with access to a communications service on a second network when the subscriber roams to the second network, wherein the subscriber has a predetermined credit amount available for use on said service, further comprising means for determining from the available credit amount a time period for which the subscriber is permitted to use the service so as to enable control of the subscriber's use of said service in dependence on the determined time period.

15. A network configuration according to claim 14 wherein the determination means comprises a pre-payment server connected to the first network.

16. Apparatus for providing a pre-payment subscriber to a first communications network with access to a communications service on a second communications network via a user terminal, when the subscriber roams to the second network, wherein the subscriber has a predetermined amount of credit available for use on the service, comprising:
means responsive to requests from the user terminal to determine from the credit amount a time period for which the subscriber is permitted to use the service so as to enable control of the subscriber's use of said service in dependence on the determined time period.
